# EUROPÄISCHE PATENTANMELDUNG

(11) **EP 1 205 715 A2**
(43) Veröffentlichungstag der Anmeldung: **15.05.2002**
(21) Anmeldenummer: 01126384.5
(22) Anmeldetag: 07.11.2001
(51) Int. Cl.: F24F 5/00, F24D 3/12

(54) **Heiz- und/oder Kühlanlage für Gebäude**

(30) Priorität: 09.11.2000 DE 10056672
(71) Anmelder: Kleehammer, Michael, 73730 Esslingen (DE)
(72) Erfinder: Kleehammer, Michael, 73730 Esslingen (DE)
(74) Vertreter: Vetter, Hans, Dipl.-Phys. Dr.

(57) **Zusammenfassung**

Es wird eine Heiz- und/oder Kühlanlage für Gebäude mit einem unisoliert in Außenwänden (14), Decken (18) und Fußböden (12) der gesamten Außenhülle des Gebäudes verlegten Rohrsystem (11) für Heiz- und/oder Kühlflüssigkeit vorgeschlagen, wobei diese mit dem Rohrsystem (11) versehene Außenhülle eine Abschirmung gegen Kälte- und/oder Wärmeeinfall bildet. Eine Beheizung der Innenbereiche ist dadurch entbehrlich, und es ergeben sich Kosteneinsparungen bei der Verlegung der Anlage und bei den Heizkosten.

## Beschreibung

Die Erfindung betrifft eine Heiz- und/oder Kühlanlage für Gebäude, bei der entsprechend temperiertes Wasser über Rohrleitungen den zu heizenden oder zu kühlenden Stellen bzw. Bauteilen zugeleitet wird.

Bekannte Heizanlagen sind Radiatoren-, Fußboden- oder Luftheizungen, bei denen die Wärmeabgabe über Konvektion oder Strahlung an die Raumluft erfolgt. Zur Einsparung von Heizenergie ist es weiterhin bekannt, Außenfassaden mit Innen- oder Außenisolierungen zu versehen bzw. schlecht wärmeleitende Baumaterialien zu verwenden.

Bei allen derartigen Heizanlagen, jedoch auch Kühlanlagen, liegt das Ziel darin, den Verbrauch an Heizenergie und dadurch Kosten noch stärker zu senken.

Diese Aufgabe wird erfindungsgemäß durch eine Heiz- und/oder Kühlanlage für Gebäude mit einem unisoliert in Außenwänden, Decken und Fußböden der gesamten Außenhülle des Gebäudes verlegten Rohrsystem für Heiz- und/oder Kühlflüssigkeit gelöst, wobei diese mit dem Rohrsystem versehene Außenhülle eine Abschirmung gegen Kälte- und/oder Wärmeeinfall bildet.

Die Vorteile der erfindungsgemäßen Anlage bestehen insbesondere darin, dass die Wärmeenergie nicht in bekannter Weise durch Konvektion und Strahlung in das Gebäude-Innere gebracht bzw. auf die Gebäude-Innenluft übertragen wird, sondern ausschließlich in die Außenhülle des Gebäudes bzw. die entsprechenden Außenwände, Außendecken und Außenfußböden gebracht wird, so dass die Außenhülle selbst eine Abschirmung gegen Kälte- und/oder Wärmeeinfall bildet. Im Falle der Gebäudeheizung werden durch die Wärmezufuhr die Baustoffe der Außenhülle ausgetrocknet und dadurch der Wärmewiderstand erhöht und der Wärmeübergangswert reduziert. Die Verlegung der Rohrleitungen in der Außenhülle ist einfach und kostengünstig, da gezielt keine Isolierung der Rohrleitungen verwendet wird, wobei eine solche Isolierung sogar unerwünscht ist, weil die Wärmeabgabe an die Außenwände bzw. Baustoffe und sonstigen Flächen der Außenhülle ja gerade erwünscht ist. Kaltstrahlende Außenwandbereiche sind daher so gut wie nicht mehr vorhanden, so dass gegenüber herkömmlichen Heizanlagen 2 - 3° C niedrigere Raumtemperaturen immer noch als angenehm empfunden werden. In Verbindung mit der erfindungsgemäßen Abschirmung der Außenhülle ergeben sich je nach Austrocknung des Baustoffes Energieeinsparungen von 10 - 60 %. Durch die sich ergebenden niedrigeren Raumtemperaturen, geringeren Luftüberdruck und kleinere Thermik wird der Lüftungswärmebedarf reduziert. Durch die fehlende Konvektionswärme entfällt die Staubaufwirbelung und wird die Staubbildung stark gemindert. Der Feuchtigkeitshaushalt wird durch den Trocknungseffekt durch Aufheizung der Außenhülle reguliert. Diffusionsoffene Bauweisen werden durch die Austrocknung gefördert und tragen stark zur Behaglichkeit bei. Unterschiedliche Temperaturzonen, zum Beispiel offener kalter Kellerraum zum beheizten Wohnraum, können exakt gefahren werden, da keine aufsteigende Wärme vorhanden ist. Durch fehlende Strahlungswärme im Fußbodenbereich ist eine bessere Verträglichkeit beispielsweise bei Venenleiden gewährleistet. Die Investitionskosten liegen deutlich niedriger im Vergleich zu Radiatoren-, Fußboden- und Luftheizungen. Das Rohrsystem kann an übliche bekannt Heiz- bzw. Kühlgeräte, wie Heizkessel, Wärmepumpen, Luft-, Wasser- und/oder Erdkollektoren oder dergleichen, angeschlossen werden.

Durch die in den Unteransprüchen aufgeführten Maßnahmen sind vorteilhafte Weiterbildungen und Verbesserungen der im Anspruch 1 angegebenen Heiz- und/oder Kühlanlage möglich.

Die Heiz- und/oder Kühlflüssigkeit ist zweckmäßigerweise Wasser, wobei prinzipiell auch andere bekannte Heiz- und/oder Kühlflüssigkeiten eingesetzt werden können.

Das Rohrsystem ist an eine Heiz- und/oder Kühlvorrichtung für die Heiz- und/oder Kühlflüssigkeit angeschlossen, wobei es sich hierbei in vorteilhafter Weise um eine herkömmliche Vorrichtung handeln kann, beispielsweise ein marktüblicher Heizkessel, insbesondere Gasbrennwertgerät, Ölheizkessel, Wärmepumpe oder Solarkollektoren, die einzeln oder additiv betrieben werden können. Im Falle einer Kühlvorrichtung können bekannte Kühlaggregate, kaltes Brauchwasser aus dem Leitungsnetz oder Erdkollektoren einzeln oder additiv betrieben werden.

Zur möglichst guten Wärmeübertragung sind die Rohrleitungen des Rohrsystems direkt im Baustoff bei massiver Bauweise oder im geschlossenen Luftraum von Hohlwänden, Hohldecken oder Hohlfußböden verlegt. Bei Holzkonstruktionen sind die Rohrleitungen beispielsweise in Installationsebenen der Außenwände, Außendecken und Außenfußböden verlegt. Bei einer Holzmodulbauweise ist auch eine Vorfertigung möglich. Die Heiz- oder Kühlleistung für die Außenhülle ist nur zur Erzielung der jeweils gewünschten Temperatur der Bereiche oder Bauteile dieser Außenhülle ausgelegt. Der Wärmebedarf wird also auf die einzelnen Bereiche bzw. Bauteile der Außenhülle und nicht wie bisher üblich auf den Raum bezogen berechnet. Dies trägt wesentlich zur Heizkosteneinsparung bei. Es hat sich dabei als ausreichend erwiesen, die Außenbereiche, also Außenwandungen und dergleichen, lediglich handwarm aufzuheizen.

Die Nennweite der Rohrleitungen des Rohrsystems ist zweckmäßigerweise kleiner oder gleich 12 mm, wobei beispielsweise herkömmliche Kupferrohre und/oder handelsübliches Rohrmaterial eingesetzt werden können.

Die Außenhülle des Gebäudes wird in optimaler Weise so mit Rohrleitungen versehen, dass auf einen Quadratmeter Wohnfläche oder beheizte Grundfläche 2 - 3 lfdm Rohr kommen. Insbesondere werden sämtliche Kaltteile und Kältebrücken mit Rohrleitungen belegt, beispielsweise mit Rücklaufleitungen zur Reduzierung der Rücklauftemperatur bei optimaler Ausnutzung der marktüblichen Brennwerttechnik. Die Kaltstrahlung von Fensterflächen wird über speziell verlegte Heizungsrohre kompensiert, beispielsweise durch enger verlegte Rohre in der Fensterumgebung.

Die Gebäudefassaden sind zweckmäßigerweise, insbesondere umlaufend, hinterlüftet und können selbstverständlich in an sich bekannter Weise mit zusätzlichen Wärmeisolationsmitteln versehen sein. Zweckmäßigerweise wird die Warmluft im Schwerkraftprinzip, insbesondere umlaufend, von der Südseite zur Nordseite ausgetauscht, bzw. im Sommer umgekehrt. Die Umwälzung kann auch mechanisch, z.B. über Voltaik unterstützt werden.

Ausführungsbeispiele der Erfindung sind in der Zeichnung dargestellt und in der nachfolgenden Beschreibung näher erläutert. Es zeigen:
- Fig. 1: ein schematisch dargestelltes Gebäude mit einer durch ein Rohrsystem abgeschirmten Außenhülle,
- Fig. 2: eine Detaildarstellung eines Eckbereichs zur Erläuterung der Verlegung der Rohrleitungen und
- Fig. 3: einen schematisch dargestellten Rohrverlauf in einem teilweise dargestellten Raum der unteren Ebene.

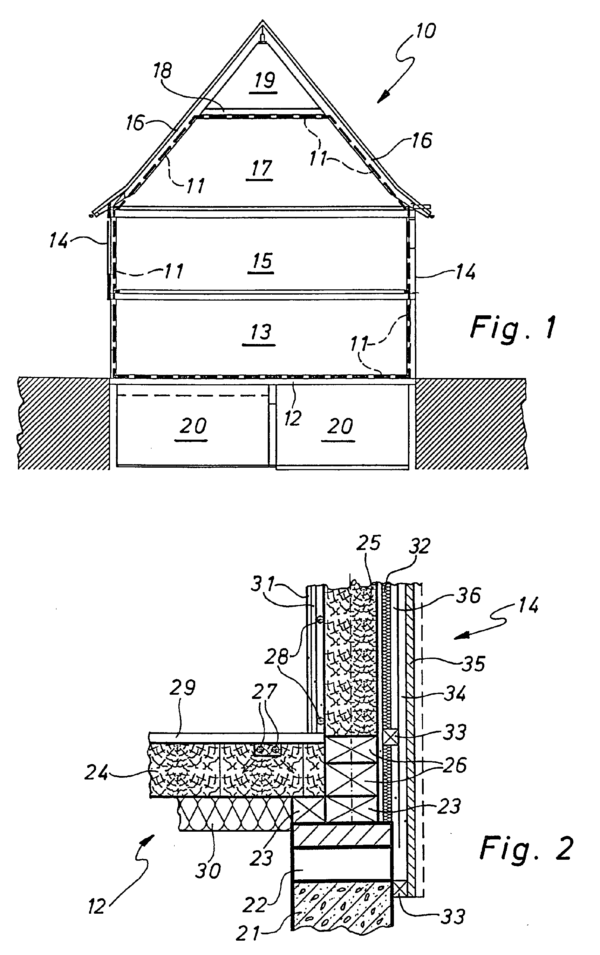

In Fig. 1 ist ein zweistöckiges Gebäude 10 mit einer Heiz- und Kühlanlage dargestellt, die ein in der gesamten Außenhülle des Gebäudes verlegtes Rohrsystem 11 besitzt, wobei diese das Rohrsystem 11 enthaltende Außenhülle eine Abschirmung gegen Kälte- bzw. Wärmeeinfall bildet. Dieses Rohrsystem 11 ist im Fußboden 12 des Erdgeschosses 13, in den Außenwandungen 14 des Erdgeschosses 13 und des 1. Obergeschosses 15, in den Dachwandungen 16 des 2. Obergeschosses 17 sowie in der Decke 18 dieses 2. Obergeschosses 17 verlegt, so dass die so definierte Außenhülle vollständig abgeschirmt ist. Der Dachboden 19 und das Kellergeschoss 20 sind nicht in diese Außenhülle einbezogen, da sie nicht geheizt oder gekühlt werden sollen. Die Auswahl, welche Bereiche die Außenhülle umfassen soll, ist selbstverständlich frei wählbar bzw. definierbar.

In Fig. 2 ist ein Eckbereich des Erdgeschosses 13 im Detail dargestellt. Das Gebäude ruht auf einem Betonfundament 21, das Öffnungen 22 für die Durchlüftung besitzt, von denen in der Detailansicht gemäß Fig. 2 nur eine dargestellt ist. Auf diesem Betonfundament 21 ruhen über Auflager 23 Holzbalken 24 des Fußbodens 12 des Erdgeschosses 13 sowie Holzpfosten 25 der Außenwandungen 14. Dabei liegen die Holzbalken 24 und die Holzpfosten 25 jeweils stirnseitig an einem gemeinsamen Rahmen 26 an. In die Holzbalken 24 des Fußbodens 12 sind Rohrleitungen 27 eingelassen, und an den Holzpfosten 25 sind Rohrleitungen 28 des Rohrsystems 11 angebracht, die sich selbstverständlich auch entlang von nicht dargestellten Zwischenelementen zwischen den Holzbalken 24 und Holzpfosten 25 erstrecken oder aber die Zwischenräume überbrücken.

Zur Bildung des Fußbodens 12 befindet sich ein Fußbodenaufbau 29 auf den Holzbalken 24, während die Unterseite mit einer Isolierung 30 versehen ist. In ähnlicher Weise sind die Rohrleitungen 28 an den Holzpfosten 25 durch Verbundplatten 31 abgedeckt, beispielsweise Seekiefer/Fermacell-Platten. Selbstverständlich können auch andere bekannte Wandplatten eingesetzt werden. Wesentlich dabei ist es, dass die Wärme bzw. Kälte der Rohrleitungen 27, 28 direkt an den Fußboden 12 bzw. die Außenwandungen 14 abgegeben wird. Isolationen der Rohrleitungen 27, 28 können daher vollständig entfallen. Die Rohrleitungen 28 an den Außenwandungen 14 sind im geschlossenen Luftraum dieser Außenwände 14 verlegt. Im Falle von massiven Wänden werden die Rohrleitungen 28 selbstverständlich im jeweiligen Baustoff verlegt oder darin eingelassen.

Die Außenwandungen 14 besitzen außen eine Isolierung 32 und eine mittels Abstandselementen 33 angebrachte Konterlattung 34, auf der eine Außenschale 35 befestigt ist. Dadurch bildet sich ein Hinterlüftungsbereich 36. Selbstverständlich können auch andere bekannte Isoliermaßnahmen und Isolierschichten eingesetzt werden.

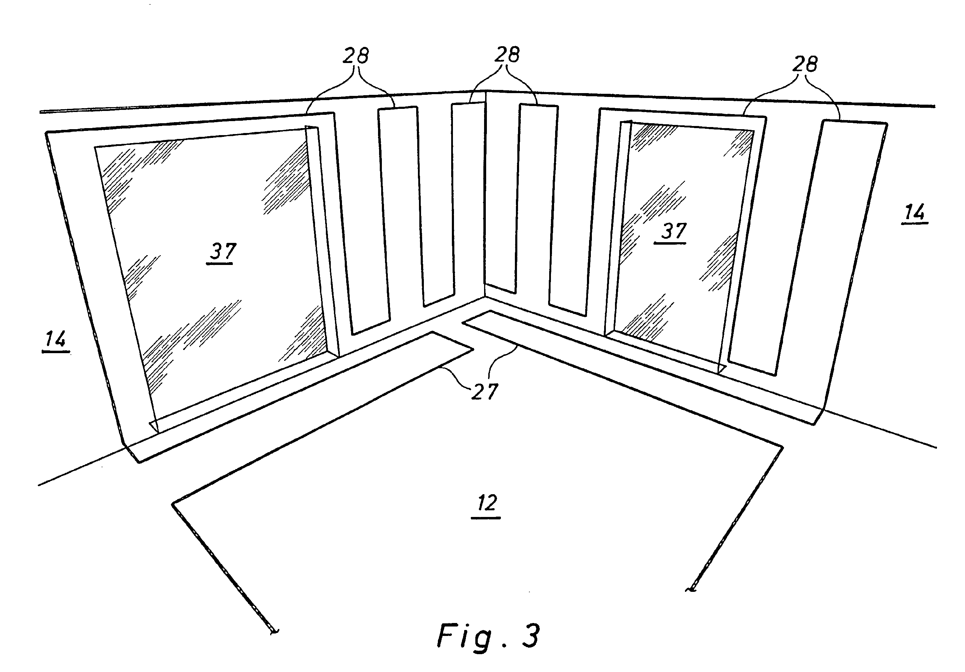

Gemäß Fig. 3 werden die Rohrleitungen 27, 28 des Rohrsystems 11 in Form von hin- und hergehenden Rechteckschleifen an bzw. in den Wänden, Decken und Fußböden der Außenschale verlegt. Sämtliche Kaltteile und Kältebrücken werden dabei mit solchen Rohrleitungen belegt. Die Kaltstrahlung der Fensterflächen der Fenster 37 wird dabei durch entsprechende Verlegung der Rohrleitungen 28 kompensiert, beispielsweise durch engere Verlegung oder Umrandung der Fensterflächen durch solche Rohrleitungen.

Das Rohrsystem 11 wird zur Heizung des Heizmediums, beispielsweise Wasser, an eine Heizvorrichtung angeschlossen, wobei hierbei eine herkömmliche Heizvorrichtung eingesetzt werden kann, beispielsweise ein marktüblicher Heizkessel, ein Gasbrennwertgerät, ein Ölheizkessel, eine Wärmepumpe oder Solar- und/oder Erdkollektoren, die einzeln oder additiv betrieben werden können. Zur Kühlung wird das Rohrsystem 11 an ein Kühlaggregat, an ein Kaltwassersystem oder an Erdkollektoren angeschlossen, wobei auch hier wieder ein einzelner oder additiver Betrieb möglich ist. Die Anlage kann dabei insgesamt zur Heizung, zur Kühlung oder zur kombinierten Heizung und Kühlung eingesetzt werden, wobei im letzteren Falle Umschaltmittel zur Umschaltung zwischen Heizvorrichtung und Kühlvorrichtung vorgesehen sind für den Winterbetrieb bzw. Sommerbetrieb.

Als Rohrleitungen 27, 28 dienen herkömmliche Heizungsrohre, beispielsweise Kupferrohre, mit einer Nennweite von weniger als 12 mm. Das Prinzip dieser Heiz- und/oder Kühlanlage beruht nicht auf der Wärmeabgabe über Konvektion und Strahlung wie bei den herkömmlichen Heizungssystemen, sondern auf der Abschirmung des Wohngebäudes gegen Kälte- bzw. Wärmeeinfall. Der Widerstand der Wand wird durch die Wärmezufuhr erhöht, wobei die Wärmeabgabe direkt in den Baustoff bzw. in die Wandungen erfolgt. Die Außenhülle braucht dabei nur auf relativ geringe Temperaturwerte gebracht werden, die einige Grad Celsius über der gewünschten Raumtemperatur liegen. Dabei werden die Raumtemperaturen ca. 2 - 3° C niedriger berechnet als nach DIN 4701 bei gleicher Behaglichkeit, da die Kältestrahlung der Wände im Falle der Heizung entfällt. Der Feuchthaushalt wird durch den Trocknungseffekt der Rohrleitungen reguliert. Diffusionsoffene Bauweisen werden durch die Austrocknung gefördert und tragen stark zur Behaglichkeit bei.

Typische Werte für die Verlegung der Rohrleitungen 27, 28 sind 2,5 lfdm Rohr pro Quadratmeter beheizter Fläche, während bekannte Fußboden- und Wandheizungssysteme bei 4 - 10 lfdm Rohr pro Quadratmeter liegen. Im Falle der Kühlung empfiehlt sich eine dichtere Verlegung von beispielsweise 5 - 7 lfdm Rohr pro Quadratmeter Abschirmungsfläche.

Da zwangsläufig beispielsweise im Falle der Heizung die Vorlauftemperatur höher als die Rücklauftemperatur ist und die Außenhülle eine im Wesentlichen gleiche Temperatur aufweisen soll, werden die Rohrleitungen im Rücklaufbereich enger bzw. dichter als im Vorlaufbereich verlegt. Dadurch können die gewünschten Temperaturen der Wände, Decken und Fußböden der Außenhülle eingestellt werden. Entsprechendes gilt für die Kühlung.

Das erfindungsgemäße System kann für sich allein, aber auch in Kombination mit herkömmlichen Heizsystemen oder Heizsystemkomponenten, wie z.B. Radiatoren oder Lüftungsanlagen, ausgeführt werden.

## Patentansprüche

1. Heiz- und/oder Kühlanlage für Gebäude, mit einem unisoliert in Außenwänden (14), Decken (18) und Fußböden (12) der gesamten Außenhülle des Gebäudes verlegten Rohrsystem (11) für Heiz- und/oder Kühlflüssigkeit, wobei diese mit dem Rohrsystem (11) versehene Außenhülle eine Abschirmung gegen Kälte- und/oder Wärmeeinfall bildet.

2. Heiz- und/oder Kühlanlage nach Anspruch 1, **dadurch gekennzeichnet, dass** die Heiz- und/oder Kühlflüssigkeit Wasser ist.

3. Heiz- und/oder Kühlanlage nach Anspruch 1 oder 2, **dadurch gekennzeichnet, dass** das Rohrsystem (11) an eine Heiz- und oder Kühlvorrichtung für die Heiz- und/oder Kühlflüssigkeit angeschlossen ist.

4. Heiz- und/oder Kühlanlage nach einem der vorhergehenden Ansprüche, **dadurch gekennzeichnet, dass** die Rohrleitungen (27, 28) des Rohrsystems (11) direkt im Baustoff bei massiver Bauweise oder in geschlossenen Lufträumen von Hohlwänden, Hohldecken oder Hohlfußböden verlegt sind.

5. Heiz- und/oder Kühlanlage nach einem der vorhergehenden Ansprüche, **dadurch gekennzeichnet, dass** die Heiz- oder Kühlleistung für die Außenhülle nur zur Erzielung der jeweils gewünschten Temperatur der Bereiche und Bauteile dieser Außenhülle ausgelegt sind, wobei diese Temperatur im Falle der Heizung vorzugsweise nur wenige Grad Celsius über der gewünschten Innentemperatur und im Falle der Kühlung vorzugsweise nur wenige Grad Celsius unterhalb der gewünschten Innentemperatur des Gebäudes liegt.

6. Heiz- und/oder Kühlanlage nach einem der vorhergehenden Ansprüche, **dadurch gekennzeichnet, dass** die Nennweite der Rohrleitungen (27, 28) des Rohrsystems (11) kleiner oder gleich 12 mm ist, wobei die Rohrleitungen (27, 28) insbesondere aus Kupfer oder Kupferlegierungen oder aus handelsüblichem Rohrmaterial bestehen.

7. Heiz- und/oder Kühlanlage nach einem der vorhergehenden Ansprüche, **dadurch gekennzeichnet, dass** die Außenhülle des Gebäudes im Falle der Heizung 2 - 3 lfdm Rohr pro Quadratmeter beheizter Grundfläche, insbesondere Wohngrundfläche, und im Falle der Kühlung 5 - 7 lfdm Rohr pro Quadratmeter aufweist.

8. Heiz- und/oder Kühlanlage nach einem der vorhergehenden Ansprüche, **dadurch gekennzeichnet, dass** die Gebäudefassade, insbesondere umlaufend, hinterlüftet ist.

9. Heiz- und/oder Kühlanlage nach einem der vorhergehenden Ansprüche, **dadurch gekennzeichnet, dass** Fensterflächen oder Kältebrücken wärmemäßig durch entsprechend verlegte Rohre, insbesondere enger verlegte Rohre, in der jeweiligen Umgebung kompensiert werden.

10. Heiz- und/oder Kühlanlage nach einem der vorhergehenden Ansprüche, **dadurch gekennzeichnet, dass** zum Heizen eine Vorlauftemperatur von maximal 70° C und eine Rücklauftemperatur von 20 - 35° C und/oder zum Kühlen eine Vorlauftemperatur von mindestens 17° C und ein Rücklauftemperatur im Bereich von 24° C eingestellt wird.
